Europäisches Patentamt

European Patent Office

Office européen des brevets

(11) Numéro de publication: **0 267 814**
**B1**

## (12) FASCICULE DE BREVET EUROPEEN

(45) Date de publication du fascicule du brevet:
07.02.90

(51) Int. Cl.⁴: **B60Q 1/04**

(21) Numéro de dépôt: **87402037.3**

(22) Date de dépôt: **14.09.87**

(54) **Projecteur pour véhicule.**

(30) Priorité: **06.10.86 FR 8613869**

(43) Date de publication de la demande:
**18.05.88 Bulletin 88/20**

(45) Mention de la délivrance du brevet:
**07.02.90 Bulletin 90/6**

(84) Etats contractants désignés:
**AT DE ES GB IT NL SE**

(56) Documents cités:
**FR-A- 1 257 788**
**US-A- 2 910 577**
**US-A- 4 345 307**

(73) Titulaire: **FIVES-CAIL BABCOCK, Société Anonyme,
38, rue de la République, F-93107 Montreuil(FR)**

(72) Inventeur: **Petracchi, Patrice, 40, rue Bourdignon,
F-94100 Saint Maur(FR)**
Inventeur: **Rit, Jean, 20, Avenue du Mesnil, F-94210 La
Varenne(FR)**

(74) Mandataire: **Fontanié, Etienne, FIVES-CAIL
BABCOCK 38, rue de la République, F-93107 Montreuil
Cédex(FR)**

ACTORUM AG

**Description**

La présente invention concerne les projecteurs pour véhicule comportant un carter fixé dans un logement approprié prévu dans la carrosserie du véhicule et un bloc optique amovible fixé dans l'ouverture antérieure du carter. Le bloc optique comprend une glace, généralement bombée, et un réflecteur muni en son centre d'une douille formant support pour la lampe.

Sur ces projecteurs, et plus particulièrement ceux équipant des véhicules militaires, le bloc optique est soumis à des fortes vibrations, et éventuellement à des chocs, qui réduisent notablement la durée de vie des lampes. Pour remédier à cet inconvénient on a proposé de monter le bloc optique sur le carter par l'intermédiaire d'un dispositif de suspension élastique placé dans un plan perpendiculaire à l'axe du projecteur et contenant le centre de gravité de l'ensemble suspendu. Un tel projecteur, tel que défini dans le préambule de la revendication 1, est connu par example par le document FR-A 1 257 788.

Le but de la présente invention est de fournir un dispositif de suspension élastique permettant de démonter facilement le bloc optique et d'assurer une bonne étanchéité entre ce dernier et le carter.

Le projecteur objet de la présente invention est caractérisé en ce que le dispositif de suspension élastique est constitué par une pluralité de plots amortisseurs en élastomère, en ce que la fixation du bloc optique sur le carter est réalisée exclusivement par l'intermédiaire desdits plots et en ce qu'un joint d'étanchéité dont la dureté est inférieure à celle desdits plots est comprimé entre la face arrière du bloc optique et l'avant carter.

Les plots pourront être ajustés dans des logements ménagés dans le carter, par exeple au quatre sommets d'un carré, et fixés au fond de ceux-ci par une vis dont la tête est noyée dans le plot.

Pour fixer le bloc optique sur les plots on peut utiliser des moyens de fixation classiques, tels que vis et écrou, ou des moyens de fixation rapides, dont un des éléments, par exemple la vis ou le goujon 1/4 de tour, sera solidaire du bloc optique et l'autre élément noyé dans le plot.

Ces éléments de fixation peuvent être montés sur une plaque carrée ou rectangulaire comportant une ouverture dans laquelle s'adapte la glace du bloc optique est qui est fixée sur ce dernier. Les plots amortisseurs seront montés de la même façon sur un rebord de même forme solidaire du carter. De préférence, le carter et ce rebord constitueront une seule pièce moulée en matière plastique, les logements des plots étant ménagés au moulage dans cette plaque. Un logement pourra aussi être prévu à l'arrière du carter et à l'intérieur de celui-ci pour le connecteur permettant de relier la lampe à une source électrique, ce logement étant disposé de telle sorte que le connecteur rentre pratiquement dans le gabarit du carter lorsqu'il est placé dans son logement.

D'autres caractéristiques de l'invention apparaitront à la lecture de la description qui suit et se réfère aux dessins l'accompagnant qui montrent, à titre d'exemple non limitatif, un mode de réalisation de l'invention et sur lesquels :

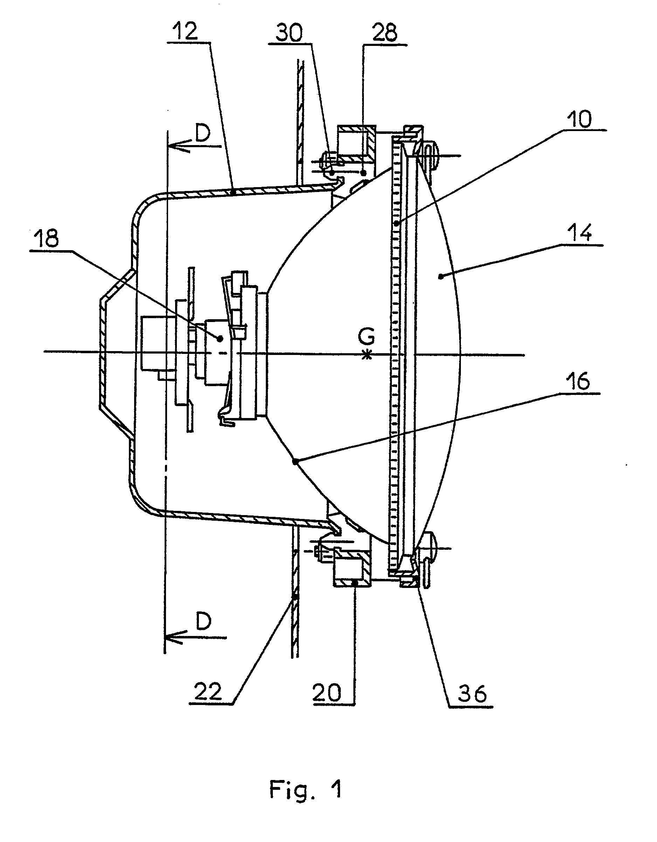

La figure 1 est une vue partiellement en coupe longitudinale et partiellement en élévation d'un projecteur conforme à l'invention ;

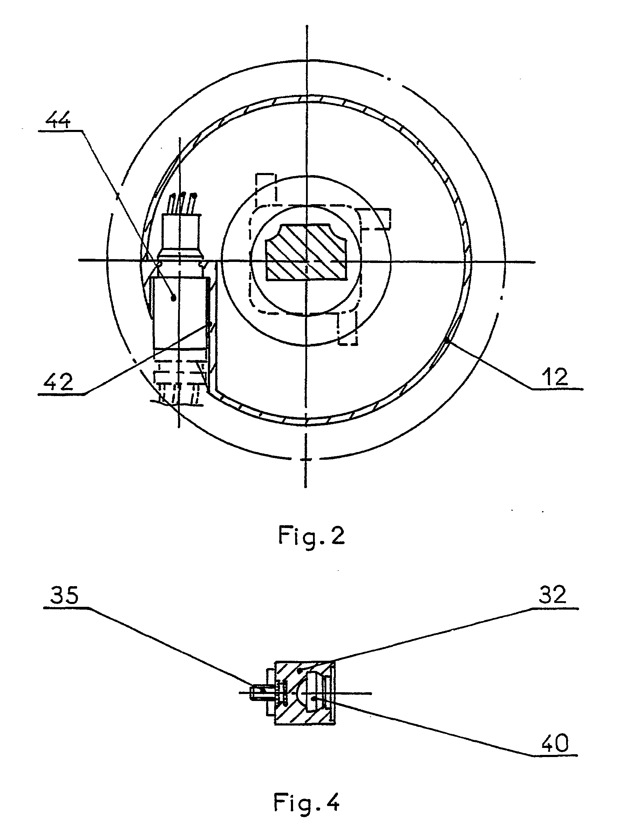

La figure 2 est une coupe suivant D-D (figure 1) ;

La figure 3 est une vue en élévation du projecteur avec des coupes partielles montrant les fixations du bloc optique sur le carter et de ce dernier sur le véhicule ; et

La figure 4 est une vue en coupe par un plan diamétral d'un plot amortisseur.

Le projecteur représenté sur les dessins est constitué par un bloc optique 10 et un carter 12. Le bloc optique est formé d'une glace 14 et d'un réflecteur 16 muni en son centre d'une douille recevant la lampe 18. Le carter est réalisé en une seule pièce moulée en matière plastique. Il a une section circulaire et comporte à l'avant un rebord 20 dont le contour extérieur a la forme d'un carré et qui sert, en particulier, à la fixation du carter sur la carrosserie 22 du véhicule, au moyen de vis 24 et de ressorts 26. Un joint d'étanchéité 28 est monté à l'avant du carter, sur une partie tronconique de celui-ci ; il est muni de tétons 30 engagés à force dans des trous du carter et assurant sa fixation sur le carter.

Le rebord 20 porte également, à chacun de ses angles, un plot amortisseur 32 dont la base est maintenue dans un logement 34 ménagé dans le rebord et qui est fixé sur celui- ci au moyen d'une vis 35 dont la tête est noyée dans le plot et qui traverse le fond du logement. Ces plots font saillie sur la face avant du carter et servent à la fixation du bloc optique. Ils sont réalisés en un élastomère dont la dureté est supérieure à celle du joint d'étanchéité 28.

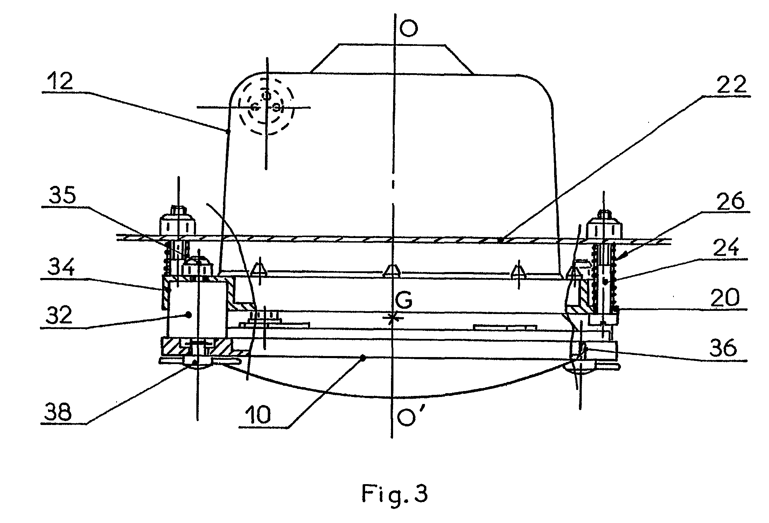

Une plaque carrée 36, en matière plastique, dans laquelle est ménagée une ouverture pour la glace du bloc optique, est fixée sur celui-ci, par exemple par collage. Cette plaque porte à chacun de ses angles un goujon 38 qui constitue l'un des éléments d'une fixation rapide dont l'autre élément 40 est noyé dans un plot 32. Au moyen de ces fixations, la plaque 36 est appliquée sur le sommet des plots 32 qui supportent le bloc optique, le joint d'étanchéité 28 étant alors comprimé entre le réflecteur 16 et le carter. Comme on le voit sur la figure 3, le plan perpendiculaire à l'axe O - O' du projecteur et contenant le centre de gravité G du bloc optique coupe les plots 32 approximativement à mi-hauteur. On obtient ainsi un amortissement efficace des vibrations du bloc optique.

Un logement 42 est prévu à l'arrière du carter et à l'intérieur de celui-ci pour un connecteur 44 permettant de relier la lampe 18 à une source électrique extérieure. Ce logement a son axe confondu avec une corde d'une section droite du carter et pénètre suffisamment à l'intérieur de celui-ci pour que le connecteur ne sorte pratiquement pas du gabarit du carter.

Il est bien entendu que toutes les modifications qui peuvent être apportées au mode de réalisation décrit par l'emploi de moyens techniques équivalents entrent dans le cadre de l'invention, si celles-ci sont mises en œuvre dans le cadre des revendications qui suivent.

## Revendications

1. Projecteur pour véhicule comportant un carter (12) et un bloc optique (10) amovible fixé à l'avant du carter par l'intermédiaire d'un dispositif de suspension élastique placé dans le plan perpendiculaire à l'axe du projecteur et contenant le centre de gravité de l'ensemble suspendu, caractérisé en ce que ledit dispositif de suspension élastique est consititué par une pluralité de plots amortisseurs (32), en ce que la fixation du bloc optique (10) sur le carter (12) est réalisée exclusivement par l'intermédiaire desdits plots et en ce qu'un joint d'étanchéité (28), dont la dureté est inférieure à celle desdits plots, est comprimé entre la face arrière du bloc optique et l'avant du carter.

2. Projecteur selon la revendication 1, caractérisé en ce que la base de chacun desdits plots (32) est maintenue dans un logement (34) ménagé dans le carter (12) et fixée à ce dernier par une vis (34) dont la tête est noyée dans le plot.

3. Projecteur selon la revendication 2, caractérisé en ce que le bloc optique (10) est appliqué sur le sommet desdits plots (32) au moyen de fixations rapides (38, 40) dont un des éléments (38) est solidaire du bloc optique et l'autre élément est noyé dans un plot (32).

4. Projecteur selon la revendication 1, 2 our 3, caractérisé en ce que ledit carter (12) comporte un rebord (20) dans lequel sont ménagés les logements (34) des plots (32), le carter et le rebord constituant une seule pièce moulée en matière plastique.

5. Projecteur selon la revendication 1, 2, 3 ou 4, caractérisé en ce qu'un logement (42) est prévu à l'arrière du carter (12) et à l'intérieur de celui-ci pour un connecteur (44) permettant de relier une lampe (18) équipant le bloc optique (10) à une source électrique extérieure et ce logement est disposé de telle sorte que le connecteur rentre pratiquement dans le gabarit du carter lorsqu'il est placé dans son logement.

## Claims

1. Vehicle headlamp comprising a housing (12) and a removable insert (10) fixed at the front of the housing by means of an elastic suspension device arranged in the plane perpendicular to the axis of the headlamp and comprising the center of gravity of the suspended unit, characterized int that said elastic suspension device is composed of a plurality of damping pads (32), that fixing of the insert (10) on the housing (12) is exclusively performed by means of said pads and that a seal (28) the hardness of which is lower than the one of said pads is compressed between the rear face of the insert and the front of the housing.

2. Headlamp according to claim 1, characterized in that the base of each of said pads (32) is held in a seat (34) provided in the housing (12) and fixed in it by a screw (34) the head of wich is embedded int the pad.

3. Headlamp according to claim 2, characterized in that the insert (10) is applied on the vertex of said pads (32) by means of quick fixing means (38, 40) one of the parts of which (38) is intergral with the insert and the other one is embedded in pad (32).

4. Headlamp according to claim 1, 2 or 3, characterized in that said housing (12) is fitted with a flange (20) in which are provided seats (34) for pads (32), the housing and the flange constituting one single plastic moulding.

5. Headlamp according to claim 1, 2, 3, or 4, characterized in that at the rear and inside of housing (12) is provided a receptacle (42) for a connector (44) permitting to connect a lamp (18) equipping insert (10) with an external electric source and that this receptacle is arranged so that the connector, when it is placed in its receptacle, virtually enters the extent of the housing.

## Patentansprüche

1. Fahrzeugscheinwerfer, bestehend aus einem Gehäuse (12) und einem herausnehmbaren Scheinwerfereinsatz (10), der an der Vorderseite des Gehäuses durch eine federnde Aufhängevorrichtung befestigt ist, welche in einer quer zur Scheinwerferachse liegendenden und den Schwerpunkt der die aufgehängte Einheit enthaltenden Ebene angeordnet ist, dadurch gekennzeichnet, daß besagte federnde Aufhängevorrichtung aus einer Vielzahl von Elastomer-Dämpfungsstopfen (32) besteht, daß die Befestigung des Einsatzes (10) am Gehäuse (12) ausschliesslich über besagte Stopfen erfolgt, und daß eine Dichtung (28), deren Härte geringer ist als die besagter Stopfen, zwischen der Rückseite des Einsatzes und der Vorderseite des Gehäuses zusammengedrückt wird.

2. Scheinwerfer gemäss Anspruch 1, dadurch gekennzeichnet, daß das Unterteil jedes besagter Stopfen (32) in einem in das Gehäuse (12) eingearbeiteten Sitz (34) gehalten wird und darin durch eine Schraube (35) befestigt ist, deren Kopf in dem Stopfen versenkt ist.

3. Schfeinwerfer gemäss Anspruch 2, dadurch gekennzeichnet, daß der Einsatz (10) an der Oberseite besagter Stopfen (32) mit Hilfe von Schnellbefestigungsmitteln (38, 40) befestigt wird, wobei eines der Teile (38) kraftschlüssig mit dem Einsatz verbunden und das andere Teil in einem Stopfen (32) versenkt ist.

4. Scheinwerfer gemäss Anspruch 1, 2 oder 3, dadurch gekennzeichnet, daß besagtes Gehäuse (12) einen Rand (20) besitzt, in welchen die Sitze (34) der Stopfen (32) eingearbeitet sind, wobei das Gehäuse und der Rand ein einziges Kunststoff-Formstück bilden.

5. Scheinwerfer gemäss Anspruch 1, 2, 3 oder 4, dadurch gekennzeichnet, daß am hinteren Teil und innerhalb des Gehäuses (12) eine Aufnahme (42) für einen Stecker (44) vorgesehen ist, welcher die Verbindung einer den Einsatz (10) ausrüstenden Lampe (18) mit einer äusseren Stromquelle ermöglicht, und daß diese Aufnahme so angeordnet ist, daß der Stecker, wenn er sich in seiner Aufnahme befindet, praktisch innerhalb des Umrisses des Gehäuses liegt.

Fig. 1

Fig. 2

Fig. 4

Fig. 3

EP 0 267 814 B1